# EUROPÄISCHE PATENTSCHRIFT

(11) **EP 2 264 869 B1**
(45) Veröffentlichungstag und Bekanntmachung des Hinweises auf die Patenterteilung: **02.12.2015**
(21) Anmeldenummer: 10185868.6
(22) Anmeldetag: 27.01.2005
(51) Int. Cl.: H02K 7/00, H02K 7/116

(54) **Elektromotor und elektrische Antriebseinheit für ein Kraftfahrzeug**
Electrical motor and electrical drive unit for a vehicle
Moteur électrique et unité motrice électrique pour un véhicule

(30) Priorität: 29.01.2004 DE 102004004617
(43) Veröffentlichungstag der Anmeldung: 22.12.2010
(62) Teilanmeldung aus: 05001679.9
(73) Patentinhaber: MAGNET-MOTOR GESELLSCHAFT FÜR MAGNETMOTORISCHE TECHNIK MBH, 82319 Starnberg (DE)
(72) Erfinder: Müller, Anton, Dr., 82327 Tutzing (DE); Walter, Fritz, 82399 Raisting (DE); Ehrhart, Peter, Dr., 81375 München (DE); Steffen, Jens, 82399 Raisting (DE)
(74) Vertreter: Klunker . Schmitt-Nilson . Hirsch

(56) Entgegenhaltungen:
- EP-A- 0 463 895
- EP-A- 1 158 652
- DE-A1- 4 214 716
- DE-A1- 10 104 275
- DE-A1- 19 805 679
- DE-C1- 19 832 876
- DE-C1- 19 948 224
- FR-A1- 2 835 109
- JP-A- 9 093 869
- JP-A- 10 336 966
- US-A- 5 087 229
- US-A- 5 345 777

## Beschreibung

Gegenstand der Erfindung ist eine elektrische Antriebseinheit für ein Kraftfahrzeug, die aufweist:
(a) einen Elektromotor mit einem drehfest festgelegten Motorgehäuse;
(b) einen in dem Motorgehäuse befestigten Stator des Elektromotors, wobei der Stator bewickelte Pole aufweist;
(c) einen innerhalb des Stators angeordneten Rotor des Elektromotors, wobei zwischen den Polflächen des Stators und dem den Polflächen des Stators zugewandten Außenumfang des Rotors ein Luftspalt besteht;
(d) ein Planetengetriebe mit einem Sonnenrad, einem Planetenträger, Planetenrädern und einem Hohlrad,
(e) wobei der Rotor des Elektromotors und das Sonnenrad des Planetengetriebes für Drehmomentübertragung in Verbindung stehen;
(f) ein Getriebegehäuse des Planetengetriebes, wobei das Getriebegehäuse an dem Motorgehäuse befestigt ist oder - mindestens zum Teil - ein integraler Bestandteil des Motorgehäuses ist;
(g) und das Merkmal, dass die Planetenräder einen derartigen größten Durchmesser und eine derartige axiale Positionierung haben, dass ein gedachter gemeinsamer Hüllzylinder für alle größten Durchmesser der Planetenräder sich radial innerhalb der an einer Axialseite des Stators vorhandenen Wickelköpfe und axial neben dem an den Luftspalt anschließenden Bereich des Rotors befindet und dass die Planetenräder entweder gar nicht oder mit weniger als 50% ihrer Zahnbreite des Eingriffs mit dem Sonnenrad in Axialrichtung nach außen über die genannten Wickelköpfe hinausragen.

Man kennt bereits elektrische Antriebseinheiten für Kraftfahrzeuge, bei denen ein Elektromotor und ein Planetengetriebe vereinigt sind. Derartige Antriebseinheiten wurden bisher mit Elektromotoren konzipiert, die mit einem Außenrotor gebaut waren, was im Interesse hoher Drehmomentabgabe des Elektromotors prinzipbedingt Vorteile verspricht.

DE 42 14 716 A1 betrifft eine integrale, Motor und Rad umfassende Anordnung (10) für ein Kraftfahrzeug, welche umfasst ein Rotor-Schüsselglied (116), das radial um das Gehäuse angeordnet und durch das Gehäuse zur Drehung um eine Längsachse desselben abgestützt ist; durch Motormittel einschliesslich eines starr an dem Haupt-Stützelement um das Rotor-Schüsselglied abgestütztes Statorelement und eine Reihe von an dem Rotor-Schüsselelement in einem Bereich zwischen dem Rotor-Schüsselelement und dem Statorelement sicher befestigten Permanentmagneten.

EP 0 463 895 A betrifft einen elektrischen Motor mit einem Untersetzungsgetriebe für ein elektrisches Fahrzeug.

DE 198 05 679 A betrifft einen Radnabenantrieb mit einem Elektromotor, dessen aussen liegender Stator mit axial vorstehenden Wicklungsköpfen einen Rotor umgibt, der über zwei Planetensätze mit jeweils einem Sonnenrad, einem Hohlrad und einem Planetenträger, auf dem Planetenräder gelagert sind, die mit dem zugehörigen Sonnenrad und Hohlrad kämmen, eine Radnabe antreibt.

JP 10-336966 A bescheibt eine Kühlstruktur für einen Motor, welche einen ausreichenden Kühleffekt bewirken kann und bei welcher im Bereich eines Statorrückens Röhrchen vorgesehen sind, die von Kühlflüssigkeit durchströmbar sind.

JP 9-093869 A beschreibt einen Motor, bei welchem an einem Außenumfang eines Stators ein gewundenes Kühlrohr zur Kühlung der Statorwicklung vorgesehen und teilweise in den Stator eingebettet ist und geringfügig über den Stator hinausragt, was dazu dient, den Stator in Rotationsrichtung festzulegen.

FR 2835109 A betrifft eine elektrische Maschine mit einem Zwischenraum zwischen einer Aussenseite des Stators und dem externen Gehäuse der rotierenden elektrischen Maschine, in dem axiale Röhrchen zur Luftkühlung vorgesehen sind. US 5 345 777 A beschreibt einen Motor, bei dem Röhrchen zur Kühlung des Stators quer zur Axialrichtung des Rotors am Außenumfang des Stators angeordnet sind und gleichzeitig eine Innenseite eines Gehäuses berühren. Die Röhrchen sind dabei in einem vom Stator und Gehäuse gebildeten Zwischenraum spiralförmig angeordnet.

DE 101 04 275 A beschreibt einen von Stromrichtervorrichtungen betriebenen Reluktanzmotor, der sich vorteilhafterweise in einem elektrisch betriebenen Fahrzeug einsetzen lässt, in welchem z. B. jedem angetriebenem Rad ein eigener Reluktanzmotor zugeordnet ist.

DE 198 32 876 C1 betrifft ein Verfahren zum Steuern einer geschalteten Reluktanzmaschine.

DE 199 48 224 C1 betrifft ein Fahrzeug mit einer drehbar gelagerten Radnabe und einem oder mehreren an der Radnabe mittels einer Felge befestigtem Rad bzw. Rädern, sowie einer elektrischen Maschine, die einen um eine gemeinsame Maschinenachse angeordneten Rotor und einen Stator aufweist, wobei der Rotor ein Hohlkörper ist und zumindest mittelbar mit der Radnabe und/oder der Felge verbunden ist.

Die erfindungsgemäße Antriebseinheit geht einen anderen Weg und ist als elektrische Antriebseinheit für ein Kraftfahrzeug gemäß Anspruch 1 ausgeführt. Die Bauweise mit Elektromotor mit Innenrotor ergibt zwar prinzipbedingt ein geringeres Abgabe-Drehmoment des Elektromotors, aber die im Anfangsabsatz angegebene Eingliederung des Planetengetriebes in die Antriebseinheit schafft die Möglichkeit, äußerst platzsparend eine hohe Übersetzung ins Langsame unterzubringen, so dass man auf diese Weise zu einem erwünscht hohen Abgabe-Drehmoment der Antriebseinheit kommt. Der Innenrotor lässt sich auf unkompliziert verlaufendem Weg des Drehmomentflusses an das Sonnenrad des Planetengetriebes ankoppeln. Die angesprochene Art der Eingliederung des Planetengetriebes in den Elektromotor bzw. die Antriebseinheit führt zu einer außerordentlich kompakten Antriebseinheit. Die Abdichtung des Motorinnenraums nach außen gestaltet sich äußerst einfach; man kann problemlos zu einer wasserdichten Ausführung des Elektromotors kommen. Die erfindungsgemäße Konzeption der Antriebseinheit führt dazu, dass die Radantriebseinheit mechanisch und von der Schachtelung der Bauteile her sehr unkompliziert aufgebaut ist und dass sich die Lagerungen an günstigen Stellen befinden; dies ist für eine gewichtsparende Bauweise von Vorteil. Außerdem lässt sich auf ganz einfache Weise eine Getriebekühlung durch Wärmeleitung zum Motorgehäuse des Elektromotors erreichen. Insgesamt ergibt sich ein Aufbau, der unter den Gesichtspunkten der leichten Herstellbarkeit, der leichten Montage, der Wartungsfreundlichkeit, der hohen Leistungsdichte, der hohen Drehmomentdichte, der Betriebssicherheit, der erreichbaren Gewichtsminderung, der Kühlung des Planetengetriebes und der guten Abdichtung nach außen äußerst vorteilhaft ist. Vorteile dieser Art werden weiter unten bei der Beschreibung eines Ausführungsbeispiels noch augenfälliger werden.

Der Stator ist als flüssigkeitsgekühlter Stator ausgeführt. Die Antriebseinheit weist ein Steckanschlusselement für elektrische Verbindung und Kühlflüssigkeitsverbindung mit dem Kraftfahrzeug auf.

Das Kraftfahrzeug ist vorzugsweise ein nicht-schienengebundenes Kraftfahrzeug, z.B. ein sich direkt auf Land-Untergrund fortbewegendes Kraftfahrzeug.

Der Land-Untergrund kann eine befestigte Straße oder andere befestigte Fläche (z.B. Flughafen-Vorfeld) sein. Aus der weiteren Beschreibung wird aber noch deutlicher werden, dass das Kraftfahrzeug bevorzugt eines ist, welches gut auf unbefestigtem Untergrund fahren kann, insbesondere landwirtschaftliches Gelände, waldiges Gelände, freie Landschaft, Expeditionswege, gerölliges Gelände, sandiges Gelände, und vieles mehr. Als konkretere Beispiele derartiger Kraftfahrzeuge seien geländetaugliche Personenwagen, Fahrzeuge für Expeditionen in unwegsames Gelände, Lastkraftwagen, Baufahrzeuge, die bei Erdarbeiten eingesetzt werden, genannt. Das Kraftfahrzeug kann ein Kraftfahrzeug mit nur einer angetriebenen Achse oder ein Kraftfahrzeug mit zwei in Längsrichtung des Kraftfahrzeugs beabstandeten, angetriebenen Achsen, oder auch ein Fahrzeug mit noch mehr angetriebenen Achsen sein. Besonders hervorgehoben wird die Möglichkeit des allradgetriebenen Kraftfahrzeugs, bei dem jedes Rad eine elektrische Antriebseinheit besitzt.

Die elektrische Antriebseinheit benötigt naturgemäß Strom, um das Kraftfahrzeug antreiben zu können. Für die Zurverfügungstellung von Strom gibt es eine Reihe von Möglichkeiten: Aus einer Oberleitung mit Stromabnehmern (wie man es von Oberleitungs-Omnibussen her kennt), Stromerzeugungsaggregat (angetrieben durch Verbrennungsmotor im weitesten Sinne, insbesondere Dieselmotor, Ottomotor, Gasturbine) an Bord des Kraftfahrzeugs, Stromspeicher an Bord des Kraftfahrzeugs, Brennstoffzelle. Kombinationen dieser "Stromquellen" sind möglich, insbesondere Stromerzeugungsaggregat plus Stromspeicher zur Abdeckung von Spitzenlast und/oder zur kurzzeitigen, abgasfreien Fahrt.

Der Rotor des Elektromotors ist vorzugsweise ein unbewickelter Rotor, so dass zwischen dem Rotor und den nicht-drehenden Teilen der Antriebseinheit keine für Strom leitende Verbindung bestehen muss.

Im Anfangsabsatz befindet sich die Aussage, "dass die Planetenräder mit weniger als 50% ihrer Zahnbreite des Eingriffs mit dem Sonnenrad in Axialrichtung nach außen über die genannten Wickelköpfe hinausragen". Bevorzugt ist, wenn dieses Hinausragen weniger als 30% dieser Zahnbreite beträgt, stärker bevorzugt weniger als 10% dieser Zahnbreite.

Bei der erfindungsgemäßen Antriebseinheit ist das Planetengetriebe vorzugsweise so ausgeführt, dass das Hohlrad drehfest ist und der rotierbare Planetenradträger für den Getriebeabtrieb vorgesehen ist. Das Ausführungsbeispiel der Erfindung wird zeigen, dass bei der Erfindung das Hohlrad sehr einfach und günstig am Getriebegehäuse eingebunden werden kann. Vorzugsweise sind die Planetenräder Stufenplanetenräder, was die Erreichung einer großen Übersetzung ins Langsame in dem Planetengetriebe ermöglicht. Vorzugsweise ragen die Stufenplanetenräder mit ihrem kleinen Außendurchmesser in einen Raum des Rotors, der gegenüber der Stirnseite des Rotors, die an dem an den Luftspalt anschließenden Bereich des Rotors gegeben ist, axial zurückgesetzt ist. Dies dient einer ungemein Platz sparenden Unterbringung des Planetengetriebes.

Es ist möglich, bei der Antriebseinheit ein Getriebe mit mehr als einer Stufe unterzubringen, also z.B. zusätzlich zu der bisher beschriebenen Planetengetriebestufe eine Stirnradstufe oder auch eine weitere Planetengetriebestufe vorzusehen. Aus Platzgründen ist jedoch bevorzugt, dass die Drehzahl des Elektromotors nur mit der beschriebenen Planetengetriebestufe ins Langsame übersetzt wird.

Vorzugsweise ist die Antriebseinheit so aufgebaut, dass ein zentraler Achsstummel vorgesehen ist, an dem das Motorgehäuse befestigt ist und/oder mit dem das Motorgehäuse - mindestens zum Teil - ein integrales Bauteil ist; und dass der Rotor auf dem Achsstummel gelagert ist. Das Achsstummel-Bauteil kann zugleich dasjenige Bauteil sein, mit welchem die gesamte Antriebseinheit an dem Kraftfahrzeug befestigt ist.

Vorzugsweise ist das Sonnenrad ein außenverzahntes Hohlrad, welches der Achsstummel durchsetzt. Normalerweise strebt man bei Planetengetrieben, die eine hohe Übersetzung liefern sollen, ein Sonnenrad mit möglichst geringem Durchmesser an. Bei der gerade angesprochenen Weiterbildung der Erfindung ergibt sich notwendigerweise ein Sonnenrad mit nicht besonders kleinem Durchmesser, weil ja der normalerweise kräftige Achsstummel hindurchgeführt ist. Ein Sonnenrad mit vergleichsweise größerem Durchmesser hat allerdings den Vorteil des geringeren Verschleißes. Das im Anfangsabsatz genannte Merkmal (g) führt dazu, dass Planetenräder mit vergleichsweise großem Außendurchmesser vorgesehen werden können. Im Verein mit dem bevorzugten Vorsehen von Stufenplanetenrädern kommt man - trotz des Sonnenrads mit vergleichsweise großem Durchmesser - zu einem Planetengetriebe mit hoher Übersetzung. Bevorzugt ist die Überssetzung ins Langsame mehr als 5:1, strärker bevorzugt mehr als 7:1, stärker bevorzugt mehr als 8:1, noch stärker bevorzugt mehr als 9:1.

Vorzugsweise ist auf dem Achsstummel, in einer Position axial neben dem Elektromotor und dem Planetengetriebe, ein Radträger drehbar gelagert. Auf diese Weise entsteht eine insgesamt extrem kompakte und mechanisch günstig aufgebaute Rad-Antriebseinheit. Vorzugsweise ist der Radträger ein solcher, an dem eine Reifenfelge, insbesondere eine Standardfelge, befestigbar ist. Es wird jedoch betont, dass der Begriff "Radträger" nicht zwingend einen für die Befestigung einer Reifenfelge geeigneten Radträger bedeutet. Es könnte sich z.B. auch um einen Radträger für ein Kettenrad handeln.

Vorzugsweise ist die Abdichtung zwischen einem rotierbaren Teil an der Abtriebsseite des Planetengetriebes und dem Getriebegehäuse an einer Stelle positioniert, die radial weiter außen als ein Lager des Radträgers ist, wobei vorzugsweise die Abdichtung nicht axial über dieses Lager hinausragt. Auf diese Weise wird für die Abdichtung des rotierbaren Teils praktisch kein Platz in Axialrichtung der Antriebseinheit verbraucht. Außerdem wird erreicht, dass die Abdichtung und gewünschtenfalls die Kopplungsstelle zwischen dem Abtrieb des Planetengetriebes und dem im Drehmomentpfad anschließenden Bauteil an einer Stelle liegt, die sehr geringe Verformungen unter äußeren Kräften erfährt. Dies erhöht die Funktionssicherheit und macht Ausgleichselemente, wie (elastische) Kupplungen, entbehrlich.

Vorzugsweise ist ein Teil des Motorgehäuses, der die Außenumfangswand und einen radial äußeren Bereich einer Stirnwand enthält, von der Antriebseinheit demontierbar, so dass der Stator mit demontiert wird und, vorzugsweise, ein radial äußerer Bereich des Rotors anschließend von der Antriebseinheit demontierbar ist. Diese Demontierbarkeit des Stators ist vorzugsweise in Richtung von dem Planetengetriebe weg möglich; es sind aber auch Ausführungen möglich, bei denen die Demontierbarkeit des Stators in der umgekehrten Axialrichtung gegeben ist.

Vorzugsweise ist ein Bereich des Rotors, der auf der anderen Axialseite des Rotors als das Planetengetriebe liegt, als Trommel einer Trommelbremse ausgebildet. Der erfindungsgemäß vorgesehene Innenrotor des Elektromotors bietet diese Möglichkeit auf besonders einfache Art, ohne dass zusätzlich Platz beansprucht wird. Das Bremsen am Rotor hat den Vorteil, dass das Bremsmoment durch das Planetengetriebe ins Hohe übersetzt wird, so dass die Bremse zur Erreichung eines gewünschten Bremsmoments sehr viel kleiner ausgeführt werden kann als wenn sie an der Abtriebsseite des Planetengetriebes positioniert wäre. Vorzugsweise ist die angesprochene Trommelbremse eine Notbremse und/oder eine Feststellbremse des Kraftfahrzeugs; man kann sie aber auch als Betriebsbremse vorsehen. Ferner ist es möglich, die Bremsbacken der Trommelbremse als Notabstützung des Rotors auszubilden. Da der Radialspalt zwischen der betreffenden Bremsbacke und dem Innenumfang der Bremstrommel problemlos kleiner gemacht werden kann als der Luftspalt des Elektromotors, kann man die Konstruktion so ausführen, dass der Rotor bei Beanspruchung mit mechanischer Überlast eher an einer Bremsbacke anstreift als an dem Stator.

Vorzugsweise ist auf der Außenseite des Radträgers eine mit Reibung arbeitende Betriebsbremse der Antriebseinheit vorgesehen. Die Unterbringung auf der Radträger-Außenseite hat den Vorteil der leichten Zugänglichkeit zum Wechseln der Bremsbeläge bzw. der Bremsklötze.

Vorzugsweise ist der Elektromotor so ausgebildet, dass er als Betriebsbremse der Antriebseinheit benutzbar ist. In der Praxis bedeutet dies vorzugsweise, dass nicht nur eine Elektronik zur Zuführung von Strom zu dem Elektromotor, sondern auch eine Elektronik zur Abführung von Strom aus dem jetzt als Generator arbeitenden "Elektromotor" vorgesehen ist. Diese zwei Funktionen können, müssen aber nicht, durch eine hierfür gemeinsame Elektronikeinheit, im Extrem sogar dual benutzbare Stromsteller, verwirklicht werden. Der beim Bremsen erzeugte Strom wird entweder in ein Stromnetz zurückgespeist oder in einem Stromspeicher gespeichert oder in Bremswiderständen in Wärme umgewandelt. Es ist möglich, zwei alternative oder sich ergänzende Betriebsbremsen vorzusehen, die eine als mit Reibung arbeitende Betriebsbremse und die andere als elektrisch arbeitende Betriebsbremse.

An dieser Stelle sei betont, dass dann, wenn ein Kraftfahrzeug mehrere Antriebseinheiten besitzt, vorzugsweise für den Elektromotor jeder Antriebseinheit eine eigene Stromversorgungselektronik vorgesehen ist.

Bei der erfindungsgemäßen Antriebseinheit kann man sich zwischen zwei Auslegungsprinzipien entscheiden. Entweder man möchte innerhalb der axialen Dimension der Reifenfelge eine Bremse unterbringen. Dann erweist sich von großem Vorteil, dass die eigentliche Antriebseinheit (Elektromotor plus Planetengetriebe) axial sehr kompakt baut, also in vielen Fällen axial neben der Bremse noch innerhalb der axialen Dimension der Reifenfelge untergebracht werden kann. Oder man verzichtet auf die Unterbringung einer mit Reibung arbeitenden Betriebsbremse axial neben der eigentlichen Antriebseinheit. Dann kann man die eigentliche Antriebseinheit axial relativ breit bauen, insbesondere so dass sie mindestens 75%, stärker bevorzugt 80 bis 100%, der axialen Dimension der Reifenfelge einnimmt. Derartige Ausführungen sind besonders sinnvoll, wenn man den Elektromotor als Betriebsbremse ausbildet. Alternativ oder zusätzlich ist es möglich, die schon weiter vorne angesprochene, am Rotor integrierte Trommelbremse als Betriebsbremse auszubilden.

Vorzugsweise ist die Drehmomentübertragungsverbindung zwischen dem Rotor und dem Sonnenrad oder die Drehmomentübertragungsverbindung zwischen dem Planetenradträger und dem Radträger trennbar, besonders bevorzugt von außen her ohne Demontage, im Extrem sogar während der Fahrt des Kraftfahrzeugs. Eine einfache Möglichkeit (unter einer ganzen Reihe von bestehenden Möglichkeiten), diese Trennbarkeit zu realisieren, besteht in der axialen Verschiebbarkeit eines Rings, der ein Vielnutprofil am Umfang hat, an einer Stelle, wo zwischen einem inneren Rotationsteil und einem koaxialen, äußeren Rotationsteil Drehmoment übertragen wird. Der Ring kann zwischen einer Koppelstellung und einer Unterbrechungsstellung verschoben werden.

Nach einer besonders wichtigen, bevorzugten Weiterbildung der Erfindung ist der Elektromotor ein Reluktanzmotor, vorzugsweise ein Reluktanzmotor mit elektronisch gesteuerter Stromzuführung. In ihrer reinen Ausführung haben die Rotoren von Reluktanzmotoren längs des Umfangs verteilt eine Reihe von ausgeprägten Polen. Eine Bewicklung oder Dauermagnete sind nicht vorgesehen. Im Zusammenhang mit der erfindungsgemäßen Antriebseinheit hat der Reluktanzmotor bzw. der Rotor eines Reluktanzmotors die Vorteile, dass vergleichsweise höhere Drehzahlen und Luftspaltdurchmesser bewältigbar sind, dass die mechanische Stabilität unproblematisch ist (keine umschließende Rotorbandage erforderlich!), und dass Überhitzungsprobleme kleiner sind. Auch auf die einfache Herstellbarkeit und damit auf den günstigen Preis wird hingewiesen. Angesichts dieser Vorteile werden gewisse prinzipbedingte Schwächen in Kauf genommen, insbesondere das tendenziell niedrigere, gelieferte Drehmoment im Vergleich zu einigen anderen Elektromotortypen. Schließlich wird darauf hingewiesen, dass bei der Ausbildung der Antriebseinheit mit einem Reluktanzmotor ein Schleppbetrieb der betreffenden Antriebseinheit (z.B. weil das gesamte Kraftfahrzeug abgeschleppt wird oder weil eine oder mehrere andere Antriebseinheiten weiterhin das Fahrzeug antreiben und ein defekter Elektromotor einer bestimmten Antriebseinheit "mitgeschleppt" wird) möglich ist, ohne dass eine mechanische Trennung zwischen dem betreffenden Rad und dem betreffenden Rotor erfolgen müsste; im Schleppbetrieb wird keine Spannung im bewickelten Stator induziert. Daraus resultiert, dass mit geringerem Leistungseinsatz geschleppt werden kann und dass - besonders wichtig (!) - auch ohne Kühlung des Elektromotors geschleppt werden kann.

Bei der Erfindung eingesetzte Reluktanzmotoren sind in der Regel mehrphasig bewickelt. Sie sind vorzugsweise längs des Umfangs des Rotors mit nichtgleichbleibender Polteilung ausgeführt.

Vorzugsweise ist der Rotor des Reluktanzmotors zusätzlich mit Dauermagneten ausgestattet, um die Leistungsdichte des Reluktanzmotors bei höheren Drehzahlen zu erhöhen. Dies soll vorzugsweise nicht so weit gehen, dass aus dem reinen Reluktanzmotor (ohne Dauermagnete) zu einem guten Stück schon ein Elektromotor würde, dessen Rotor mit Dauermagneten wechselnder Polung besetzt ist. Die nur ergänzende, nicht sehr weit gehende Ausstattung mit Dauermagneten führt dazu, dass auch bei höheren Drehzahlen noch hohe Drehmomente erzeugt werden können. Dies spiegelt sich auch wieder in hohen Bremsmomenten bei der Nutzung des Elektromotors als Bremse.

Vorzugsweise ist der Stator als geblechter Stator und/oder der Rotor als geblechter Rotor ausgeführt, um die Wirbelstromverluste zu reduzieren.

Nach einer besonders wichtigen, bevorzugten Weiterbildung der Erfindung ist der Stator als wassergekühlter Stator ausgeführt. Eine besonders bevorzugte Möglichkeit ist die Einfügung von axial verlaufenden Edelstahlröhrchen geringer Wanddicke in axial verlaufenden Nuten am Außenumfang des Stators, wobei diese Röhrchen von Kühlflüssigkeit durchströmt werden. Bei dieser Positionierung von Kühlflüssigkeit-Röhrchen nimmt die Kühlflüssigkeit nicht nur Wärme aus dem Statoreisen auf, sondern auch Wärme aus dem umschließenden Motorgehäuse. Wenn Wärme aus dem Planetengetriebe über das Getriebegehäuse zum Motorgehäuse geleitet wird, nimmt die Kühlflüssigkeit somit auch Wärme aus dem Planetengetriebe auf. Bei höheren Anforderungen an die Kühlung kann man weitere Kühlkanäle im Stator vorsehen. Alle Kühlkanäle sind an ein System der Umwälzung der Kühlflüssigkeit mittels Pumpe angeschlossen. An geeigneter Stelle des Kühlmittelkreislaufs, z.B. an der Außenseite des Motorgehäuses oder am Fahrzeug, befindet sich ein Wärmetauscher, um die Wärme letztlich an die Umgebungsluft abzugeben.

Wie schon angedeutet, ist es bevorzugt, dass das Planetengetriebe mindestens zum Teil dadurch gekühlt ist, dass Wärmeleitungsverbindung zu dem Motorgehäuse besteht und von dort aus direkte oder indirekte Wärmeabfuhr an die Umgebung erfolgt.

Im Rotor entsteht erheblich weniger Wärme als im Stator. Vorzugsweise ist der Rotor mit Luftumwälzung luftgekühlt und weist das Motorgehäuse und/oder der Stator einen Oberflächenbereich zur Wärmeaufnahme aus der umgewälzten Luft auf, so dass die Wärme letztlich von dort aus weiter abgeführt werden kann. Dieser Oberflächenbereich kann z.B. ein Bereich aus besonders gut wärmeleitendem Metall und/oder ein Bereich mit Oberflächenvergrößerung sein.

Vorzugsweise sind die Lager des Rotors und das Planetengetriebe und ggf. die Lager des Radträgers mit gemeinsamem Öl geschmiert. Bei der erfindungsgemäßen Antriebseinheit ist diese gemeinsame Schmierung konstruktiv besonders gut machbar. Die Wärmeabfuhr aus dem Schmieröl erfolgt vorzugsweise über das Getriebegehäuse und von dort teils an die Umgebung und teils an das Motorgehäuse.

Die Antriebseinheit weist ein Steckanschlusselement für elektrische Verbindung und Kühlflüssigkeitsverbindung mit dem Kraftfahrzeug auf.

Vorzugsweise weist die Antriebseinheit eine Reifendruckregelanlage auf, um den Reifendruck wahlweise erhöhen oder erniedrigen zu können. Eine Druckluftleitung zu der Felge kann durch eine Bohrung des weiter oben beschriebenen Achsstummels geführt sein, ebenso eine Hydraulikleitung oder eine elektrische Leitung zu der ggf. auf der dem Elektromotor abgewandten Seite des Getriebes vorgesehenen Bremse der Antriebseinheit.

Es wird betont, dass es im Rahmen der Erfindung möglich ist, die im Anfangsabsatz dargestellte Antriebseinheit ohne das dort genannte Merkmal (g) auszuführen. In diesem Fall kann es ratsam sein, muss aber nicht, eines oder mehrere der in der vorliegenden Anmeldung offenbarten Merkmale hinzu zu nehmen, um eine neue und erfinderische Antriebseinheit zu definieren.

Ein weiterer Gegenstand der Erfindung ist ein Kraftfahrzeug, welches mit mindestens einer Antriebseinheit ausgerüstet ist, die gemäß den vorstehenden Ausführungen ausgebildet ist.

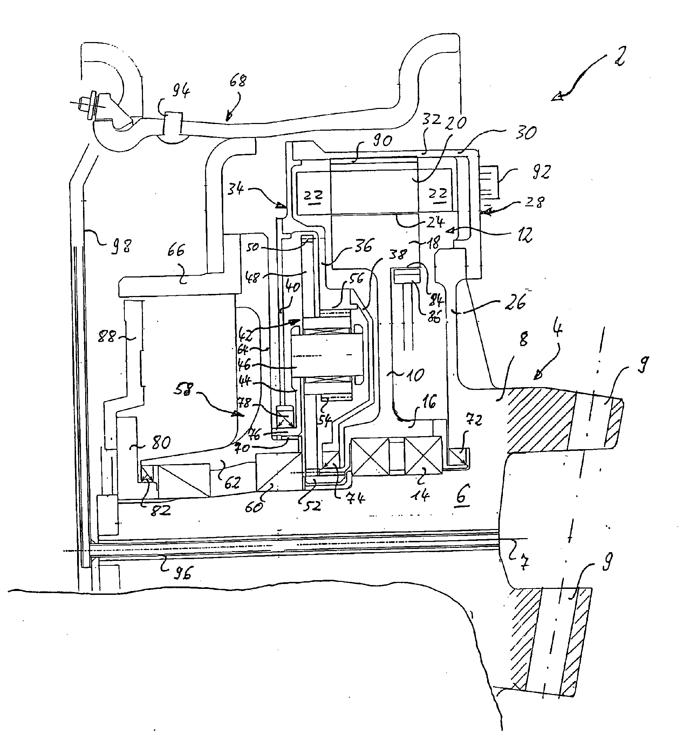

Die Erfindung und bevorzugte Ausgestaltungen der Erfindung werden nachfolgend anhand eines zeichnerisch dargestellten Ausführungsbeispiels noch näher erläutert:
Die einzige Zeichnungsfigur zeigt eine Antriebseinheit im vertikalen Achsenschnitt, wobei nur die obere Hälfte der Antriebseinheit dargestellt ist und die untere, bis auf einige Einzelheiten spiegelbildliche Hälfte weggelassen ist.
Die gesamte Antriebseinheit 2 wird von einem Achsstummel-Bauteil 4 getragen, welche einstückig den kräftigen, zylindrischen, eigentlichen Achsstummel 6 und eine Basis 8 mit zwei Bohrungen 9 aufweist. Mittels der Basis 8 lässt sich die gesamte Antriebseinheit 2 an einem nicht gezeichneten Fahrzeug befestigen. Durch Schwenken um die gemeinsame Achse der genannten Bohrungen 9 lässt sich das mit der Antriebseinheit 2 ausgestattete Rad des Fahrzeugs lenken.

Mehr rechts ist auf dem Achsstummel 6 ein Rotor 10 eines Elektromotors 12 mit zwei Wälzlagern 14 gelagert. Der Rotor 10 hat - grob gesprochen - die Gestalt einer Scheibe mit zentraler Öffnung. Um diese zentrale Öffnung herum ist Rotor 10 in Axialrichtung zur Ausbildung einer Nabe 16 vergrößert. In seinem radial äußeren Bereich 18 ist der Rotor 10 ebenfalls axial vergrößert. In dem radial äußeren Bereich 18 sind nach radial außen vorragende Rotorpole ausgebildet, die durch axial verlaufende Nuten voneinander separiert sind und durch einen gemeinsamen Rücken radial innen miteinander verbunden sind. Der radial äußere Bereich 18 ist geblecht ausgeführt, d.h. er besteht aus einer gestapelten Anzahl von Blechen, die jeweils in einer Radialebene quer zur Zentralachse 20 der Antriebseinheit 2 liegen und elektrisch voneinander isoliert sind.

Der Rotor 10 ist Bestandteil des Reluktanz-Elektromotors 12. Der Elektromotor 12 weist radial außerhalb des Rotors 10 einen Stator 20 auf, der analog wie der Rotor 10 geblecht ist. Auch der Stator 20 weist ausgeprägte Pole mit Nuten zwischen den Polen und radial außen einem verbindenden Statorrücken auf. Die Statorpole sind mit Spulen bewickelt, wobei man in der Zeichnung die sog. Wickelköpfe 22 erkennt, die dadurch entstehen, dass die Wicklungsdrähte an dem dortigen Axialende aus einer Nut austreten und umbiegend in eine andere Nut hineingeführt sind. Die Wickelköpfe 22 gehen an jedem Axialende um eine Dimension a in Axialrichtung über das Statoreisen hinaus. Zwischen dem Innenumfang des Stators 20 und dem Außenumfang des Rotors 10 befindet sich ein Luftspalt 24.

Ein Motorgehäuse 28 besteht im wesentlichen aus den folgenden Bestandteilen: Das Achsstummel-Bauteil 4 ist in dem Bereich zwischen dem Rotor 10 und den Bohrungen 9 zu einem scheibenartigen Bereich 26 erheblich vergrößerten Durchmessers ausgeführt, der einen Großteil der dortigen Stirnwand des Motorgehäuses 28 bildet. Ein zweiter Teil des Motorgehäuses 28 wird durch ein napfartiges Bauteil 30, welches eine große Zentralöffnung hat, gebildet. Der zentral offene Boden des Bauteils 30 wird im zusammengebauten Zustand durch den scheibenartigen Bereich 26 geschlossen; der Restbereich des Bodens bildet einen ringförmigen, äußeren Teil der dortigen Stirnwand des Motorgehäuses 28. Die Umfangswand des napfförmigen Bauteils 30 bildet die Umfangswand 32 des Motorgehäuses 28.

In der Zeichnungsfigur links schließt sich an die ganz offene Seite des napfförmigen Bauteils 30 ein Getriebegehäuse 34 an. Das Getriebegehäuse 34 besteht im wesentlichen aus drei Bauteilen: (1) Einem Hauptteil 36, welches von dem Anschluss an das napfförmige Bauteil 30 des Motorgehäuses 28 radial nach innen führt und dabei an zwei Stellen nach rechts abgekröpft ist. (2) Einem rechten, deckelartigen Bauteil 38, welches weiter nach radial innen geführt ist bis zu einer zentralen Öffnung des Getriebegehäuses 34. (3) Einem linken, deckelartigen Bauteil 40, welches auf der linken Seite eines Planetengetriebes 42 nach radial innen bis zu einer zentralen Öffnung geführt ist.

Der Hauptbestandteil 36 des Getriebegehäuses 34 schließt in seinem radial äußeren Bereich den Elektromotor 12, konkret dessen Stator 20, nach links hin ab. Radial innerhalb des in der Zeichnungsfigur linken Wickelkopfes 22 biegt der Hauptteil 36 nach rechts hin ab, um dann kurz vor dem radial äußeren Bereich 18 des Rotors 10 wieder in radialen Verlauf überzugehen. Radial innerhalb des Bereichs 18 des Rotors 10 verbreitert sich der Hauptteil 36 in Axialrichtung nach rechts. Dort schließt sich das rechte, deckelartige Bauteil 38 an, welches das Getriebegehäuse auf der rechten Seite des Planetengetriebes 42 fortsetzt. Das linke, deckelartige Bauteil 40 schließt das Planetengetriebe 42 auf seiner linken Seite ab.

Das Hauptteil 36 und das rechte, deckelartige Bauteil 38 sind somit einerseits Bestandteile des Getriebegehäuses 34, andererseits schließen sie aber auch den Innenraum des Elektromotors 12 auf seiner linken Seite ab.

Im Inneren des Planetengetriebes 42 befindet sich ein Planetenträger 44, der über den Umfang verteilt mehrere, axial verlaufende Bolzen 46 trägt. Auf jedem Bolzen ist ein Stufenplanetenrad 48 drehbar gelagert. Der durchmessergrößere Teilbereich jedes Stufenplanetenrads 48 ist an seinem Außenumfang mit einer Verzahnung 50 versehen. Die Verzahnung 50 kämmt mit einem weiter unten noch genauer zu beschreibenden Sonnenrad 52. Der durchmesserkleinere Bereich jedes Stufenplanetenrads 48, der axial rechts neben dem durchmessergrößeren Bereich liegt, ist an seinem Außenumfang mit einer Verzahnung 54 versehen. Die Verzahnung 54 kämmt mit einem innenverzahnten, feststehenden Hohlrad 56, welches entweder einstückig in dem Hauptteil 36 des Getriebegehäuses 34 ausgearbeitet ist oder als gesondertes Teil dort eingesetzt ist.

Das bereits angesprochene Sonnenrad 52 ist ein - grob gesprochen - hohlzylindrisches Bauteil, das innen von dem Achsstummel 6 durchsetzt wird. Auf einer rechten Teillänge ist das Sonnenrad in eine Zentralbohrung des Nabenbereichs 16 des Rotors eingeschoben und dort drehfest mit dem Rotor 10 verbunden. In einem linken Teilbereich der Länge ist das Sonnenrad mit einer Außenverzahnung 52 versehen und kämmt, wie bereits angesprochen, mit allen umfangsmäßig verteilten Stufenplanetenrädern 48.

Durch die beschriebenen Bauteile Sonnenrad 52, Stufenplanetenräder 48, feststehendes Hohlrad 56, rotierbarer Planetenträger 44 ist das Planetengetriebe 42 gebildet. Man sieht, daß die Zähne 50 der Planetenräder 48, mit denen sie mit dem Sonnenrad 52 in Eingriff sind, weniger weit nach links in der Zeichnungsfigur reichen, als die linken Wickelköpfe 22 des Stators 20 des Elektromotors 12. Die Zähne 50 befinden sich axial neben dem radial äußeren Bereich 18, der den an den Luftspalt 24 anschließenden Bereich des Rotors 10 darstellt. Diejenigen Zähne 50, die sich in der Zeichnungsfigur ganz oben befinden, befinden sich in einem radialen Abstand von der Zentralachse 7, der kleiner als der Radius des Luftspalts 24, aber größer als der Radius beim Übergang vom radial äußeren Bereich 18 des Rotors 10 in den scheibenartigen Bereich des Rotors 10 ist.

Man kann sich auch eine zylindrische Hüllfläche vorstellen, welche alle größten Durchmesser aller Planetenräder 40 außen umschließt, also jede einzelne Verzahnung 50 eines einzelnen Planetenrads 48 nur für ein kurzes umfangsmäßiges Stück berührt. Dieser Hüllfläche kann man einen Durchmesser bzw. einen Radius zuschreiben und eine axiale Breite, welche der axialen Breite der Verzahnung 50 entspricht. Diese gedachte Hüllfläche liegt gleichsam innerhalb des Winkelraums, welcher axial rechts durch den radial äußeren Bereich 18 bzw. die zwischengesetzte Wand des Gehäusehauptteils 36 begrenzt wird und der radial außen durch den Innenumfang der Gesamtheit der linken Wickelköpfe 22 bzw. den dort zwischengesetzten Bereich des Gehäusehauptteils 36 begrenzt ist. Ohne den Bereich der Erfindung zu verlassen, kann die Ausbildung des Planetengetriebes 42 auch so sein, daß die Planetenräder 48 ein Stück weiter nach links reichen, also die Verzahnungen 50 mit ihren linken Endbereichen weiter nach links ragen als die linken Wickelköpfe 22.

Links von den Planetenrädern 48 ist auf dem Achsstummel 6 ein Radträger 58 gelagert, und zwar mittels zweier beabstandeter Wälzlager 60. Der Radträger 58 besteht aus einem Nabenbereich 62 und einem scheibenartigen Bereich 64. An dem scheibenartigen Bereich 64 sind eine Bremstrommel 66 und eine Reifenfelge 68 befestigt. Ein bei betriebsfertiger Antriebseinheit 2 auf der Felge 68 befindlicher Reifen ist nicht eingezeichnet.

Rechts hat der Nabenbereich 62 des Radträgers 58 einen Bereich, der über den scheibenartigen Bereich 64 vorragt und an seinem Außenumfang mit einem axial verlaufenden Vielnutprofil 70 versehen ist. Der Planetenträger 44 besitzt in seiner Innenbohrung ein komplementäres Vielnutprofil und ist mit diesem auf das Vielnutprofil 70 des Radträgers 58 aufgeschoben. Dies schafft eine drehmomentübertragende Verbindung zwischen dem Planetenträger 44 und dem Radträger 58.

Im rechten Endbereich des Nabenbereichs 16 des Rotors 10 ist ein Simmerring 72 positioniert, der den Innenraum des Motorgehäuses 28 gegenüber der Lagerung des Rotors 10 abdichtet. Im linken Endbereich des Nabenbereichs 16 des Rotors 10 ist ein Simmerring 74 positioniert, der den Innenraum des Elektromotors 12 gegenüber dem Innenraum des Planetengetriebes 42 abdichtet. Der Simmerring 72 befindet sich zwischen dem Nabenbereich 16 des Rotors 10 und dem Achsstummel-Bauteil 4. Der Simmerring 74 befindet sich zwischen dem Nabenbereich 16 des Rotors 10 und der Innenbohrung des rechten Deckelteils 38. Zwischen der Innenbohrung des linken Deckelteils 40 und dem Außenumfang eines nach links ragenden, axialen Fortsatzes 76 des Planetenträgers 44 befindet sich ein Simmerring 78, der das Innere des Planetengetriebes 42 gegenüber der äußeren Umgebung abdichtet. Zwischen dem Nabenbereich 58 und einem auf dem linken Endbereich des Achsstummels 6 drehfest befestigten Bauteil 80 befindet sich ein Simmerring 82, der den Lagerraum des Radträgers 58 gegenüber der äußeren Umgebung abdichtet. Der mit dem Planetenträger 44 zusammenwirkende Simmerring 78 befindet sich an einer Stelle, die radial größer ist als das rechte Lager des Radträgers 58, aber über dieses Lager 60 weder nach axial links noch nach axial rechts hinausgeht.

Ferner ist zu sehen, daß der Innenumfang des radial äußeren Bereichs 18 des Rotors 10 dort, wo er sich rechts von dem scheibenartigen Bereich des Rotors 10 befindet, als Bremstrommel 84 ausgebildet ist. Zusammen mit Bremsbacken 86 wird dort eine Not- und Feststellbremse für das Fahrzeug gebildet. Ein Seilzug oder auch eine Hydraulikleitung zur Betätigung der Trommelbremse 84, 86 kann bequem durch den scheibenförmig vergrößerten Bereich 26 des Achsstummel-Bauteils 4 geführt werden.

Am linken Ende des Achsstummels 6 ist drehfest das schon weiter oben angesprochene Bauteil 80 befestigt. An dem Bauteil 80 ist ein Bremsträger 88 befestigt. An dem Bremsträger 88 sind die nicht rotierenden Bestandteile einer nicht eingezeichneten Betriebsbremse der Antriebseinheit 2 befestigt. Die Bremsbacken dieser Betriebsbremse wirken von innen her gegen den Innenumfang der rotierenden Bremstrommel 66. Durch Abbau des Bremsträgers 88 nach links ist die Betriebsbremse für Bremsbelagwechsel offen.

Das napfförmige Bauteil 30 kann man nach Lösen von Verbindungsschrauben mit dem scheibenförmig vergrößerten Bereich 26 und nach Lösen von Verbindungsschrauben mit dem Hauptteil 36 des Getriebegehäuses 34 axial nach rechts von der Antriebseinheit 2 wegnehmen. Dabei wird der Stator 20 mit demontiert. Der scheibenförmige Bereich 26 hat einen Außendurchmesser, der so klein ist, daß man auch einen radial äußeren Bereich des Rotors 10 axial nach rechts hin demontieren kann.

Radial außen am Stator 20 ist ein axial verlaufendes Metallröhrchen 90 in übertriebener Größe eingezeichnet. Das Röhrchen 90 sitzt in einer äußeren, axial verlaufenden Nut am Außenumfang des Stators 20 und reicht in eine innere, in Axialrichtung verlaufende Nut des Umfangsbereichs 32 des Motorgehäuses 28. Über den Umfang des Stators 20 verteilt sind eine Vielzahl derartiger Röhrchen 90 positioniert. Sie sind alle z.B. mit ihrem linken Ende an eine Kühlmittelzuführung und ihrem rechten Ende an eine Kühlmittelabführung angeschlossen.

Mittel für eine Luftumwälzung innerhalb des Motorgehäuses 28 sind nicht eingezeichnet. Möglich sind z.B. ventilatorflügelartige Fortsätze an geeigneter Stelle des Rotors 10.

An der rechten Stirnwand des Motorgehäuses 28 erkennt man ein Steckanschlußelement 92, wo mit einem oder mehreren Steckverbindern elektrische Verbindungen zwischen dem Stator 20 und dem rechts von der Zeichnungsfigur befindlichen Karosseriekörper des Fahrzeugs sowie Kühlmittelverbindungen zwischen dem Stator 20 und dem Karosseriekörper des Fahrzeugs hergestellt werden können. Außerdem ist schematisiert ein Reifendruckregelventil 94 in der Felge 68 eingezeichnet. Eine Druckluftleitung 96 läuft durch eine Zentralbohrung des Achsstummel-Bauteils 4 und dann ab einer rotierbaren Verbindung durch ein radkappenartiges Bauteil 98 zu dem Reifendruckregelventil 94. Durch die Zentralbohrung des Achsstummel-Bauteils 4 ist auch der elektrische oder hydraulische oder pneumatische Anschluß der Bremsanlage an dem Bremsträger 88 hergestellt.

Das Ausführungbeispiel hat vor Augen geführt, dass die Erfindung eine äußerst günstige Art der Lagerung von Rotor 10 und Radträger 58 erlaubt. Der Rotor 10 und der Radträger 58 sind jeweils beidseitig von der Ebene gelagert, in der die radiale Kraft angreift.

Günstige Trennstellen von Drehmomentübertragungsverbindungen sind bei dem Ausführungsbeispiel die Vielnutverbindung zwischen dem Rotor 10 und dem Sonnenrad 52 und die Vielnutverbindung zwischen dem Planetenträger 44 und dem Radträger 58.

Es wird ausdrücklich betont, dass eine Flüssigkeitskühlung des Stators eines Elektromotors mittels Röhrchen, vorzugsweise aus Metall, die sich im Bereich des Statorrücken-Umfangs entfernt von dem Luftspalt des Elektromotors befinden, auch losgelöst von der im Anfangsabsatz der Anmeldung angesprochenen Antriebseinheit erfinderische Bedeutung hat. Andererseits weist diese Flüssigkeitskühlung vorzugsweise eines oder mehrere der weiteren, in der Anmeldung offenbarten Merkmale auf.

## Patentansprüche

1. Elektrische Antriebseinheit für ein Kraftfahrzeug, die einen Elektromotor aufweist, der Elektromotor aufweisend:
(a) einen Stator (20) mit bewickelten Polen;
(b) einen Rotor (10),
(c) wobei zwischen dem Stator (20) und dem Rotor (10) ein Luftspalt (24) besteht;
(d) und das Merkmal, dass in demjenigen Bereich des Statorrücken-Umfangs, der sich entfernt von dem Luftspalt (24) befindet, Röhrchen (90), vorzugsweise aus Metall, vorgesehen sind, die für Flüssigkeitskühlung des Stators (20) von Kühlflüssigkeit durchströmbar sind,
wobei die Antriebseinheit (2) ferner aufweist:
(a1) ein drehfest festgelegtes Motorgehäuse (28);
(b1) der Stator (20) in dem Motorgehäuse (28) befestigt ist,
(c1) der Rotor (10) innerhalb des Stators (20) angeordnet ist, wobei der Luftspalt (24) zwischen den Polflächen des Stators (20) und dem den Polflächen des Stators (20) zugewandten Außenumfang des Rotors (10) besteht;
(d1) ein Planetengetriebe (42) mit einem Sonnenrad (52), einem Planetenträger (44), Planetenrädern (48) und einem Hohlrad (56),
(e1) wobei der Rotor (10) und das Sonnenrad (52) des Planetengetriebes (44) für Drehmomentübertragung in Verbindung stehen;
(f1) ein Getriebegehäuse (34) des Planetengetriebes (42), wobei das Getriebegehäuse (34) an dem Motorgehäuse (28) befestigt ist oder - mindestens zum Teil - ein integraler Bestandteil des Motorgehäuses (28) ist, und
(g1) ein Steckanschlusselement (92) für elektrische Verbindung und Kühlflüssigkeitsverbindung mit dem Kraftfahrzeug.

2. Elektromotor nach Anspruch 1,
**dadurch gekennzeichnet, dass** die Röhrchen (90) jeweils in einer Nut am Außenumfang des Stators (20) sitzen und in eine innere Nut eines Umfangsbereichs (32) eines Motorgehäuses (28) reichen.

3. Elektromotor nach einem der Ansprüche 1 bis 2,
**dadurch gekennzeichnet, dass** der Rotor (10) luftgekühlt mit Luftumwälzung ist und dass das Motorgehäuse (28) und/oder der Stator (20) einen Oberflächenbereich zur Wärmeaufnahme aus der umgewälzten Luft aufweist.

4. Antriebseinheit nach einem der Ansprüche 1 bis 3,
**dadurch gekennzeichnet, dass** die Planetenräder (48) einen derartigen größten Durchmesser und eine derartige axiale Positionierung haben, dass ein gedachter gemeinsamer Hüllzylinder für alle größten Durchmesser der Planetenräder (48) sich radial innerhalb der an einer Axialseite des Stators (20) vorhandenen Wickelköpfe (22) und axial neben dem an den Luftspalt (24) anschließenden Bereich (18) des Rotors (10) befindet und dass die Planetenräder (48) entweder gar nicht oder mit weniger als 50% ihrer Zahnbreite des Eingriffs mit dem Sonnenrad (52) in Axialrichtung nach außen über die genannten Wickelköpfe (22) hinausragen.

5. Antriebseinheit nach einem der Ansprüche 1 bis 4,
**dadurch gekennzeichnet, dass** die Planetenräder (48) Stufenplanetenräder sind, wobei vorzugsweise die Stufenplanetenräder (48) mit ihrem kleinen Außendurchmesser in einen Raum des Rotors (10) ragen, der gegenüber der Stirnseite des Rotors, die an dem an den Luftspalt (24) anschließenden Bereich des Rotors (10) gegeben ist, axial zurückgesetzt ist.

6. Antriebseinheit nach einem der Ansprüche 1 bis 5,
**dadurch gekennzeichnet, dass** ein Achsstummel (6) vorgesehen ist, an dem das Motorgehäuse (28) befestigt ist und/oder mit dem das Motorgehäuse (28) - mindestens zum Teil - ein integrales Bauteil ist; und dass der Rotor (10) auf dem Achsstummel (6) gelagert ist.

7. Antriebseinheit nach Anspruch 6,
**dadurch gekennzeichnet, dass** auf dem Achsstummel (6), in einer Position axial neben dem Elektromotor (12) und dem Planetengetriebe (42), ein Radträger (58) drehbar gelagert ist, wobei vorzugsweise an dem Radträger (58) eine Reifenfelge (68) befestigt ist, und/oder wobei vorzugsweise auf derAußenseite des Radträgers (58) eine mit Reibung arbeitende Betriebsbremse der Antriebseinheit (2) vorgesehen ist.

8. Antriebseinheit nach einem der Ansprüche 1 bis 7,
**dadurch gekennzeichnet, dass** ein Bereich des Rotors (10), der auf der an deren Axialseite des Rotors (10) als das Planetengetriebe (42) liegt, als Trommel (84) einer Trommelbremse ausgebildet ist, wobei vorzugsweise die Bremsbacken (86) der Trommelbremse als Notabstützung des Rotors (10) ausgebildet sind.

9. Antriebseinheit nach einem der Ansprüche 1 bis 8,
**dadurch gekennzeichnet, dass** die Drehmomentübertragungsverbindung zwischen dem Rotor (10) und dem Sonnenrad (52) oder die Drehmomentübertragungsverbindung zwischen dem Planetenradträger (44) und dem Radträger (58) trennbar ist, vorzugsweise von außen her ohne Demontage.

10. Antriebseinheit nach einem der Ansprüche 1 bis 9,
**dadurch gekennzeichnet, dass** der Elektromotor (12) ein Reluktanzmotor ist, wobei vorzugsweise der Reluktanzmotor mit elektronisch gesteuerter Stromzuführung ausgebildet ist, und/oder wobei vorzugsweise der Rotor (10) des Reluktanzmotors zusätzlich mit Dauermagneten ausgestattet ist, um die Leistungsdichte des Reluktanzmotors bei höheren Drehzahlen zu erhöhen.

11. Antriebseinheit nach einem der Ansprüche 1 bis 10,
**dadurch gekennzeichnet, dass** das Planetengetriebe (42) mindestens zum Teil dadurch gekühlt ist, dass Wärmeleitungsverbindung zu dem Motorgehäuse (28) besteht und von dort aus direkte oder indirekte Wärmeabfuhr an die Umgebung erfolgt.

12. Kraftfahrzeug,
**dadurch gekennzeichnet, dass** es mit mindestens einer Antriebseinheit (2) ausgerüstet ist, die gemäß einem der Ansprüche 1 bis 11 ausgebildet ist.

## Claims

1. An electric drive unit for a motor vehicle, comprising an electric motor, the electric motor comprising:
(a) a stator (20) having coil-wound poles;
(b) a rotor (10),
(c) with an air gap (24) being present between the stator (20) and the rotor (10);
(d) and the feature that, in the region of the stator back circumference remote from the air gap (24), there are provided small tubes (90), preferably of metal, through which cooling liquid can flow for liquid cooling of said stator (20),
the drive unit (2) further comprising:
(a1) a motor housing (28) fixed in non-rotatable manner;
(b1) the stator (20) being mounted in the motor housing (28);
(c1) the rotor (10) being arranged internally of the stator (20), with the air gap (24) being present the pole faces of the stator (20) and the outer periphery of the rotor (10) facing the pole faces of the stator (20);
(d1) a planetary gear system (42) having a sun wheel (52), a planet carrier (44), planet wheels (48) and a ring gear (56),
(e1) the rotor (10) and the sun wheel (52) of the planetary gear system (44) being coupled for torque transmission;
(f1) a gear casing (34) of the planetary gear system (42), the gear casing (34) being attached to the motor housing (28) or - at least in part - being an integral component part of the motor housing (28), and
(g1) a connector element (92) for electrical connection and cooling liquid connection to the motor vehicle.

2. A drive unit according to claim 1,
**characterised in that** the small tubes (90) are each located in a groove on the outer circumference of the stator (20) and extend so as to engage in an inner groove of a circumferential portion (32) of a motor housing (28).

3. A drive unit according to any of claims 1 and 2,
**characterised in that** the rotor (10) is air-cooled with air circulation, and that the motor housing (28) and/or the stator (20) has a surface portion for taking up heat from the circulating air.

4. A drive unit according to any of claims 1 to 3,
**characterised in that** the planet wheels (48) have such a maximum diameter and such axial positioning that an imaginary common envelope cylinder for all maximum diameters of the planet wheels (48) is located radially inside of the winding heads (22) present on one axial side of the stator (20) as well as axially beside the portion (18) of the rotor (10) adjoining the air gap (24) and that the planet wheels (48) project in axial direction outwardly beyond said winding heads (22) either not at all or with less than 50 % of their tooth width in engagement with the sun wheel (52).

5. A drive unit according to any of claims 1 to 4,
**characterised in that** the planet wheels (48) are stepped planet wheels, with the stepped planet wheels (48) preferably having their small outer diameter project into a space of the rotor (10) which is axially recessed from the face side of the rotor present at the portion of the rotor (10) adjoining the air gap (24).

6. A drive unit according to any of claims 1 to 5,
**characterised in that** there is provided a stub axle (6) on which the motor housing (28) is mounted and/or with which the motor housing (28) - at least in part - forms an integral component; and that the rotor (10) is supported on the stub axle (6).

7. A drive unit according to claim 6,
**characterised in that** a wheel carrier (58) is rotatably supported on the stub axle (6) in a position axially beside the electric motor (12) and the planetary gear system (42), the wheel carrier (58) preferably having a tire rim (68) mounted thereon, and/or a frictional service brake of the drive unit (2) being preferably provided on the outside of the wheel carrier (58).

8. A drive unit according to any of claims 1 to 7,
**characterised in that** a portion of the rotor (10) located on the other axial side of the rotor (10) from the planetary gear system (42) is designed in the form of a drum (84) of a drum brake, the brake shoes (86) of the drum brake being preferably designed as an emergency supporting means of the rotor (10).

9. A drive unit according to any of claims 1 to 8,
**characterised in that** the torque transmission connection between the rotor (10) and the sun wheel (52) or the torque transmission connection between the planet carrier (44) and the wheel carrier (58) is adapted to be separated, preferably from the outside without unmounting.

10. A drive unit according to any of claims 1 to 9,
**characterised in that** the electric motor (12) is a reluctance motor, the reluctance motor being preferably designed with electronically controlled current supply, and/or wherein preferably the rotor (10) of the reluctance motor is provided in addition with permanent magnets so as to increase the power density of the reluctance motor at higher speeds.

11. A drive unit according to any of claims 1 to 10,
**characterised in that** the planetary gear system (42) at least in part is cooled in that there is a thermally conductive connection to the motor housing (28) and direct or indirect heat discharge is effected from there to the surroundings.

12. A motor vehicle,
**characterised in that** it is equipped with at least one drive unit (2) designed in accordance with any of claims 1 to 11.

## Revendications

1. Unité d'entraînement électrique pour un véhicule à moteur, qui présente un moteur électrique, le moteur électrique présentant :
(a) un stator (20) comprenant des pôles enroulés ;
(b) un rotor (10) ;
(c) un entrefer (24) existant entre le stator (20) et le rotor (10) ;
(d) et la caractéristique telle que, dans la zone correspondant à la partie dorsale du stator, qui est située à distance de l'entrefer (24), on prévoit des petits tubes (90), de préférence en métal, qui peuvent être traversés par un liquide de refroidissement pour le refroidissement du stator (20) par liquide ;
dans laquelle l'unité d'entraînement (2) présente en outre :
(a1) un carter de moteur (28) monté en antirotation ;
(b1) le fait que le stator (20) est fixé dans le carter de moteur (28) ;
(c1) le fait que le rotor (10) est disposé à l'intérieur du stator (20), l'entrefer (24) étant présent entre les faces polaires du stator (20) et la circonférence externe du rotor (10) tournée vers les faces polaires du stator (20) ;
(d1) un engrenage épicycloïdal (42) comprenant une roue solaire (52), un porte satellite (44), des roues planétaires (48) et une couronne (56) ;
(e1) le rotor (10) et la roue solaire (52) de l'engrenage épicycloïdal (44) étant mis en liaison pour la transmission d'un couple de rotation ;
(f1) un logement d'engrenage (34) de l'engrenage épicycloïdal (42), le logement d'engrenage (34) étant fixé au carter de moteur (28) ou représentant - au moins en partie - un élément constitutif du carter de moteur (28) ; et
(g1) un élément de branchement (92) pour la liaison électrique et la liaison par liquide de refroidissement avec le véhicule à moteur.

2. Moteur électrique selon la revendication 1, **caractérisé en ce que** les petits tubes (90) sont insérés respectivement dans une rainure pratiquée dans la circonférence externe du stator (20) et aboutissent dans une rainure interne d'une zone périphérique (32) d'un carter de moteur (28).

3. Moteur électrique selon l'une quelconque des revendications 1 à 2, **caractérisé en ce que** le rotor (10) est refroidi par air via une circulation d'air et **en ce que** le carter de moteur (28) et/ou le stator (20) présentent une zone superficielle pour l'absorption de chaleur à partir de l'air en circulation.

4. Unité d'entraînement selon l'une quelconque des revendications 1 à 3, **caractérisée en ce que** les roues planétaires (48) possèdent un diamètre maximal tel et un positionnement axial tel qu'un cylindre d'enveloppement commun virtuel pour tous les diamètres maximaux des roues planétaires (48) se trouve à l'intérieur en direction radiale des têtes de bobines (22) présentes contre un côté axial du stator (20) et en direction axiale à côté de la zone (18) du rotor (10) qui se raccorde à l'entrefer (24) et **en ce que** les roues planétaires (48) ne font pas du tout saillie ou font saillie à concurrence de moins de 50 % de leur largeur de denture d'engrènement avec la roue solaire (52) en direction axiale vers l'extérieur au-delà des têtes de bobines mentionnées (22).

5. Unité d'entraînement selon l'une quelconque des revendications 1 à 4, **caractérisée en ce que** les roues planétaires (48) sont des roues planétaires à gradins, dans laquelle, de préférence, les roues planétaires à gradins (48) font saillie avec leur petit diamètre externe dans un espace du rotor (10) qui est prévu en retrait en direction axiale par rapport au côté frontal du rotor qui est disposé contre la zone du rotor (10) qui se raccorde à l'entrefer (24).

6. Unité d'entraînement selon l'une quelconque des revendications 1 à 5, **caractérisée en ce qu'**on prévoit un bout d'arbre (6) auquel est fixé le carter de moteur (28) et/ou avec lequel le carter de moteur (28) représente - au moins en partie - un élément constitutif et **en ce que** le rotor (10) est monté sur le bout d'arbre (6).

7. Unité d'entraînement selon la revendication 6, **caractérisée en ce qu'**un support de roue (58) est monté en rotation sur le bout d'arbre (6), dans une position axiale à côté du moteur électrique (12) et de l'engrenage épicycloïdal (42), une jante de pneumatique (68) étant fixée de préférence contre le support de roue (58), et/ou dans laquelle on prévoit, de préférence sur le côté externe du support de roue (58), un frein de manoeuvre de l'unité d'entraînement (2) travaillant par friction.

8. Unité d'entraînement selon l'une quelconque des revendications 1 à 7, **caractérisée en ce qu'**une zone du rotor (10), qui est située sur l'autre côté axial du rotor (10) par rapport à celui où est situé l'engrenage épicycloïdal (42), est réalisée sous la forme d'un tambour (84) d'un frein à tambour, les mâchoires (86) du frein à tambour étant réalisées de préférence pour faire office de support d'urgence pour le rotor (10).

9. Unité d'entraînement selon l'une quelconque des revendications 1 à 8, **caractérisée en ce que** la liaison de transmission d'un couple de rotation entre le rotor (10) et la roue solaire (52) ou bien la liaison de transmission d'un couple de rotation entre le porte satellite (44) et le support de roue (58) peut être séparée, de préférence depuis l'extérieur, en l'absence de démontage.

10. Unité d'entraînement selon l'une quelconque des revendications 1 à 9, **caractérisée en ce que** le moteur électrique (12) est un moteur à réluctance, le moteur à réluctance étant réalisé de préférence avec une alimentation en courant commandée par voie électronique, et/ou dans laquelle de préférence le rotor (10) du moteur à réluctance est équipé en outre d'aimants permanents afin d'augmenter la densité de puissance du moteur à réluctance lors de vitesses de rotation élevées

11. Unité d'entraînement selon l'une quelconque des revendications 1 à 10, **caractérisée en ce que** l'engrenage épicycloïdal (42) est refroidi au moins en partie par l'existence d'une liaison de conduction thermique avec le carter de moteur (28), et une évacuation de chaleur directe ou indirecte ayant lieu à partir de là dans l'environnement.

12. Véhicule à moteur, **caractérisé en ce qu'**il est équipé d'au moins une unité d'entraînement (2) qui est réalisée conformément à l'une quelconque des revendications 1 à 11.
